(19) Europäisches Patentamt
European Patent Office
Office européen des brevets

(11) **EP 3 203 105 A1**

(12) **EUROPEAN PATENT APPLICATION**
published in accordance with Art. 153(4) EPC

(43) Date of publication:
**09.08.2017 Bulletin 2017/32**

(51) Int Cl.:
*F16F 9/32* *(2006.01)*          *B62K 25/08* *(2006.01)*

(21) Application number: **15847091.4**

(86) International application number:
**PCT/JP2015/076403**

(22) Date of filing: **17.09.2015**

(87) International publication number:
**WO 2016/052214 (07.04.2016 Gazette 2016/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **29.09.2014   JP 2014197946**

(71) Applicant: **KYB Corporation
Tokyo 105-6111 (JP)**

(72) Inventor: **KURITA, Norihiko
Tokyo 105-6111 (JP)**

(74) Representative: **Grünecker Patent- und
Rechtsanwälte
PartG mbB
Leopoldstraße 4
80802 München (DE)**

(54) **SUSPENSION DEVICE**

(57)     A suspension apparatus (100) includes a pair of dampers (DR, DL) configured to extend/contract to exert a damping force, each of the dampers (DR, DL) includes a cylinder (3R, 3L), a piston (4R, 4L) slidably inserted into the cylinder (3R, 3L) and configured to partition the inside of the cylinder (3R, 3L) into an extension-side chamber (5R, 5L) and a contraction-side chamber (6R, 6L), and a piston rod (7R, 7L) connected to the piston (4R, 4L) and movably inserted into the cylinder (3R, 3L), and an inner diameter of the cylinder (3R) of damper (DR) is different from an inner diameter of the cylinder (3L) of the damper (DL).

FIG. 1

**EP 3 203 105 A1**

**Description**

TECHNICAL FIELD

The present invention relates to a suspension apparatus.

BACKGROUND ART

A suspension apparatus that supports a steered wheel on the front side of a saddle-type vehicle is conventionally constituted by a pair of front forks. Each front fork includes, for example, a fork main body having an outer tube and an inner tube that is movably inserted into the outer tube, and a damper that is accommodated within the fork main body.
The damper includes the following: a cylinder connected to the inner tube; a piston that is slidably inserted into the cylinder; a piston rod that is movably inserted into the cylinder; an extension-side damping passage, and a contraction-side damping passage. The piston partitions the inside of the cylinder into an extension-side chamber and a contraction-side chamber, and hydraulic oil is filled into the extension-side chamber and the contraction-side chamber. One end of the piston rod is connected to the piston, and the other end is connected to the outer tube. The extension-side damping passage allows the extension-side chamber to communicate with the contraction-side chamber. The contraction-side damping passage allows the contraction-side chamber to communicate with a reservoir provided within the fork main body.
The damper extends/contracts in accordance with extension/contraction of the fork main body. During an extension operation, the damper exerts a damping force by applying resistance against the flow of hydraulic oil passing through the extension-side damping passage. During a contraction operation, the damper exerts a damping force by applying resistance against the flow of hydraulic oil passing through the contraction-side damping passage (for example, JP2001-50327A).

SUMMARY OF INVENTION

Such a pair of front forks grips both the left and right ends of the axle of the steered wheel. The steered wheel is attached to the handle of the saddle-type vehicle via the pair of front forks. By incorporating a suspension spring into the pair of front forks, a suspension apparatus that elastically supports the vehicle body is formed.
In general, the pair of front forks has the same structure, and the built-in dampers also have the same constitution. Therefore, the characteristics of the damping force generated by each front fork relative to the extension/contraction velocity are approximately the same. The damping force characteristics affect the riding comfort of the saddle-type vehicle, and thus the specifications of the dimensions of each part and the type of valve in the front forks are determined in accordance with the desired riding comfort of the saddle-type vehicle.
If the inner diameter of the cylinder of the damper in the front fork is increased, the pressure receiving area of the piston increases, and this is advantageous because it becomes easier to obtain a large damping force. However, the sensitivity of the damping force relative to the characteristics of the valve is high, and thus fluctuations in the damping force tend to occur in each article. Further, the flow rate of the hydraulic oil that passes through the valve is high and the outer diameter of leaf valves that are laminated in the piston also increases, and thus there is a tendency for delays in the closing of the leaf valves to occur during switching of the operation direction from extension to contraction or from contraction to extension, which frequently leads to time delays in generation of the damping force.
If the inner diameter of the cylinder of the damper in the front fork is decreased, the flow rate of the hydraulic oil that passes through the valve is low and the outer diameter of the leaf valves that are laminated in the piston also decreases, and thus the influence of delays in valve closing is small and this is advantageous in that there are few time delays in generation of the damping force. On the other hand, in a damper in which the inner diameter of the cylinder is small, the compression amount per a fixed volume of the extension-side chamber and the contraction-side chamber relative to the piston displacement is large in comparison to a damper in which the inner diameter of the cylinder is large, and thus the hydraulic oil often exhibits apparent elasticity due to the influence of gases which have dissolved into the hydraulic oil. In addition, the pressure receiving area is also small, and thus in a damper in which the inner diameter of the cylinder is small, the rise in the damping force tends to be slow.
If the outer diameter of the piston rod is increased without changing the inner diameter of the cylinder, the same effect occurs as in the case of increasing the inner diameter of the cylinder. If the outer diameter of the piston rod is decreased without changing the inner diameter of the cylinder, the same effect occurs as in the case of decreasing the inner diameter of the cylinder. In other words, increasing the outer diameter of the piston rod results in the same advantages and disadvantages as increasing the inner diameter of the cylinder, and decreasing the outer diameter of the piston rod results in the same advantages and disadvantages as decreasing the inner diameter of the cylinder.
In this way, there are advantages and disadvantages according to the size of the inner diameter of the cylinder or the size of the outer diameter of the piston rod, and thus they exhibit a tradeoff relationship. Therefore, it is difficult to improve the damping force characteristics related to the size of the damping force and the time delays in damping force generation.

An object of the present invention is to provide a suspension apparatus with which it is easy to improve the damping force characteristics.

According to one aspect of the present invention, a suspension apparatus includes a pair of dampers configured to extend/contract to exert a damping force, each of the dampers comprises a cylinder, a piston slidably inserted into the cylinder and configured to partition the inside of the cylinder into an extension-side chamber and a contraction-side chamber, and a piston rod connected to the piston and movably inserted into the cylinder, and an inner diameter of the cylinder of one of the dampers is different from an inner diameter of the cylinder of the other.

BRIEF DESCRIPTION OF DRAWINGS

FIG. 1 is a cross-section view of a suspension apparatus according to a first embodiment of the present invention;
FIG. 2 is diagram illustrating the temporal change in the damping force of the suspension apparatus according to the first embodiment of the present invention;
FIG. 3 is a diagram illustrating a tuning example of the damping force characteristics of the suspension apparatus according to the first embodiment of the present invention; and
FIG. 4 is a cross-section view of a suspension apparatus according to a second embodiment of the present invention.

DESCRIPTION OF EMBODIMENTS

The present invention will now be explained below based on the embodiments illustrated in the drawings.

<First Embodiment>

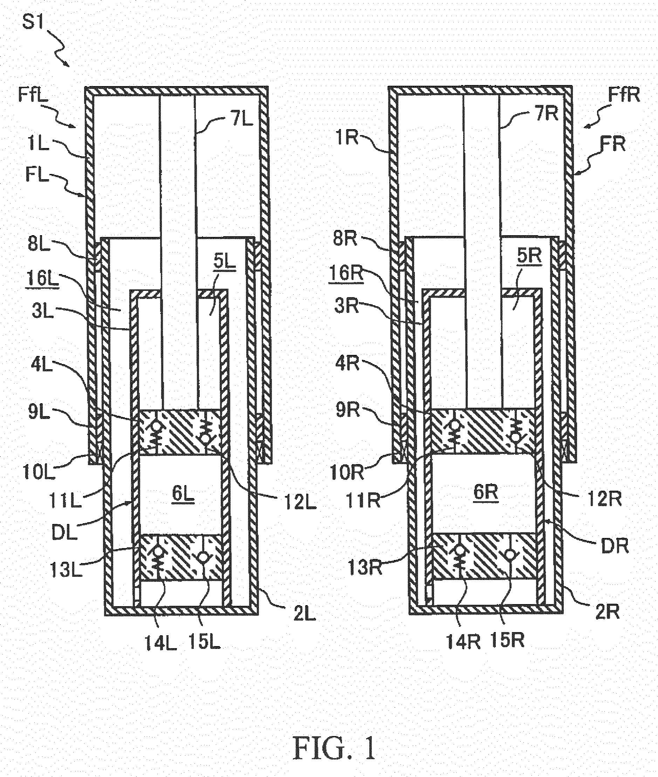

As shown in FIG. 1, a suspension apparatus S1 according to a first embodiment includes a pair of front forks FfR and FfL. The pair of front forks FfR and FfL are interposed between the vehicle body and the vehicle axle of a saddle-type vehicle (not illustrated), and suspend the vehicle wheel on the vehicle body.

The front forks FfR, FfL include a fork main bodies FR, FL and a dampers DR, DL accommodated within the fork main bodies FR, FL, respectively. The fork main bodies FR, FL include an outer tubes 1R, 1L, and an inner tubes 2R, 2L slidably inserted into the outer tubes 1R, 1L, respectively. The dampers DR, DL extend/contract in accordance with the extension/contraction of the fork main bodies FR, FL to exert a damping force, respectively.

Each part of the suspension apparatus S1 will now be explained in detail below. The outer tubes 1R, 1L and the inner tubes 2R, 2L have a cylindrical shape in which one end is closed. In the fork main bodies FR, FL, the inner tubes 2R, 2L are slidably inserted into the outer tubes 1R, 1L via bearings 8R, 9R, 8L, 9L. Therefore, the fork main bodies FR, FL can freely extend and contract. Further, sealed spaces are formed inside the fork main bodies FR, FL by seal members 10R, 10L provided between the outer tubes 1R, 1L and the inner tubes 2R, 2L.

As shown in FIG. 1, each of the front forks FfR, FfL of the present embodiment is configured as a so-called inverted front fork in which the outer tubes 1R, 1L are arranged on the top and the inner tubes 2R, 2L are arranged on the bottom. The present embodiment may also be configured as a so-called upright front fork in which the outer tubes 1R, 1L is arranged on the bottom and the inner tubes 2R, 2L is arranged on the top.

The dampers DR, DL include a cylinders 3R, 3L, a pistons 4R, 4L slidably inserted into the cylinders 3R, 3L, and a piston rods 7R, 7L movably inserted into the cylinders 3R, 3L. The pistons 4R, 4L partition the inside of the cylinders 3R, 3L into extension-side chambers 5R, 5L and contraction-side chambers 6R, 6L, and hydraulic oil is filled into the extension-side chambers 5R, 5L and the contraction-side chambers 6R, 6L. The respective ends of the piston rods 7R, 7L are connected to the pistons 4R, 4L.

The dampers DR, DL are accommodated within the fork main bodies FR, FL. In detail, the respective ends (the bottom ends in FIG. 1) of the cylinders 3R, 3L are fixed to the bottom of the inner tubes 2R, 2L. The respective other ends of the piston rods 7R, 7L are connected to the respective tops of the outer tubes 1R, 1L. When the fork main bodies FR, FL extend/contract, or in other words when the outer tubes 1R, 1L and the inner tubes 2R, 2L move relatively in the axial direction, the cylinders 3R, 3L and the piston rods 7R, 7L also move relatively in the axial direction. As a result, the dampers DR, DL extend/contract to exert a damping force.

The structure of the dampers DR, DL will now be explained in detail below.

The dampers DR, DL further include the following: an extension-side damping passages 11R, 11L; a contraction-side damping passages 12R, 12L; a valve cases 13R, 13L provided below the cylinders 3R, 3L; a discharge passages 14R, 14L; and a suction passages 15R, 15L. The extension-side damping passages 11R, 11L and the contraction-side damping passages 12R, 12L are provided in the pistons 4R, 4L, and allow the extension-side chambers 5R, 5L to communicate with the contraction-side chambers 6R, 6L. The discharge passages 14R, 14L and the suction passages 15R, 15L are provided in the valve cases 13R, 13L, and allow the inside of the cylinders 3R, 3L to communicate with the outside of the dampers DR, DL.

The spaces that are inside the fork main bodies FR, FL and outside the dampers DR, DL (the spaces between the cylinders 3R, 3L and the inner tubes 2R, 2L and the spaces inside the outer tubes 1R, 1L) are filled with hydraulic oil and gas. Therefore, these spaces function as a reservoirs 16R, 16L. The discharge passages 14R, 14L and the suction passages 15R, 15L allow the inside of the cylinders 3R, 3L to communicate with the reservoirs 16R, 16L.

The extension-side damping passages 11R, 11L include a damping valves (not assigned a reference numeral), and permit only the flow of hydraulic oil from the extension-side chambers 5R, 5L toward the contraction-side chambers 6R, 6L while applying resistance to this flow. The contraction-side damping passages 12R, 12L include damping valves (not assigned a reference numeral), and permit only the flow of hydraulic oil from the contraction-side chambers 6R, 6L toward the extension-side chambers 5R, 5L while applying resistance to this flow.

The discharge passages 14R, 14L include damping valves (not assigned a reference numeral), and permit only the flow of hydraulic oil from the contraction-side chambers 6R, 6L toward the reservoirs 16R, 16L while applying resistance to this flow. The suction passages 15R, 15L include check valves (not assigned a reference numeral), and permit only the flow of hydraulic oil from the reservoirs 16R, 16L toward the contraction-side chambers 6R, 6L.

When the dampers DR, DL performs an extension operation, the pistons 4R, 4L move relative to the cylinders 3R, 3L (upwards in FIG. 1), and hydraulic oil moves from the compressed extension-side chambers 5R, 5L to the contraction-side chambers 6R, 6L via the extension-side damping passages 11R, 11L. Since the extension-side damping passages 11R, 11L apply resistance to the flow of hydraulic oil, the pressure in the extension-side chambers 5R, 5L rises. At this time, the piston rods 7R, 7L move out of the cylinders 3R, 3L. Therefore, hydraulic oil in an amount equivalent to the volume of the piston rods 7R, 7L that is moving out is supplied from the reservoirs 16R, 16L to the contraction-side chambers 6R, 6L via the suction passages 15R, 15L, and the pressure within the contraction-side chambers 6R, 6L becomes the reservoir pressure. Accordingly, a pressure difference is generated between the extension-side chambers 5R, 5L and the contraction-side chambers 6R, 6L. This pressure difference acts on the pistons 4R, 4L and the dampers DR, DL exerts a damping force to suppress the extension operation.

When the dampers DR, DL perform a contraction operation, the pistons 4R, 4L move relative to the cylinders 3R, 3L (downwards in FIG. 1), and hydraulic oil moves from the compressed contraction-side chambers 6R, 6L to the extension-side chambers 5R, 5L via the contraction-side damping passages 12R, 12L. Hydraulic oil in an amount equivalent to the volume of the piston rod 7R, 7L that is moving into the cylinders 3R, 3L is discharged to the reservoirs 16R, 16L via the discharge passages 14R, 14L. The contraction-side damping passages 12R, 12L and the discharge passages 14R, 14L apply resistance to the flow of hydraulic oil, and thus the pressure of the contraction-side chambers 6R, 6L rises. Since the pressure of the expanded extension-side chambers 5R, 5L drops, a pressure difference is generated between the extension-side chambers 5R, 5L and the contraction-side chambers 6R, 6L. This pressure difference acts on the pistons 4R, 4L and the dampers DR, DL exert a damping force to suppress the contraction operation.

As explained above, the contraction-side damping passages 12R, 12L apply resistance to the flow of passing hydraulic oil. Even if the contraction-side damping passages 12R, 12L do not apply resistance to the flow of passing hydraulic oil, during the contraction operation of the dampers DR, DL, the pressure inside the cylinders 3R, 3L is increased by the discharge passages 14R, 14L, and thus the dampers DR, DL can exert a contraction-side damping force. Therefore, the contraction-side damping passages 12R, 12L may include check valves which apply almost no resistance instead of the damping valves.

The inner diameter of the cylinder 3R in the damper DR on one side is greater than the inner diameter of the cylinder 3L of the damper DL on the other side, and the outer diameter of the piston 4R is also greater than the outer diameter of the piston 4L. The outer diameters of the piston rods 7R, 7L of the left and right dampers DR, DL are the same. Thus, the pressure receiving area on the side of the extension-side chamber 5R of the piston 4R is greater than the pressure receiving area on the side of the extension-side chamber 5L of the piston 4L, and the pressure receiving area on the side of the contraction-side chamber 6R of the piston 4R is also greater than the pressure receiving area on the side of the contraction-side chamber 6L of the piston 4L.

With regard to the closing delay of the damping valve, in the following, an example will be explained in which a poppet valve having a circular sheet surface is utilized as the damping valve in the damping passage.

Herein, two dampers which have different cylinder inner diameters and exert the same damping force F when operating at the same stroke velocity Vm will be assumed.

The pressure receiving area of a piston is determined by the cylinder inner diameter. Thus, in the two dampers which exert the same damping force F when operating at the same stroke velocity Vm, the following Eq. (1) is established using a cylinder cross-section area $A_L$ of the damper having the larger diameter cylinder, a cylinder cross-section area As of the damper having the smaller diameter cylinder, a pressure $P_L$ of the chamber that is compressed by the operation of the damper having the larger diameter cylinder, and a pressure Ps of the chamber compressed by the operation of the damper having the smaller diameter cylinder.

$$P_S A_S = P_L A_L \quad \cdots\cdots\cdots\cdots (1)$$

Further, from Eq. (1) and from an orifice equation exhibiting a relationship between the pressure of the chamber that is compressed and the flow rate, the following Eq. (2) is derived using a passage diameter $d_L$ of the damping passage of the damper having the larger diameter cylinder, a passage diameter ds of the damping passage of the damper having the smaller diameter cylinder, a lift amount $h_L$ from the opening end of the damping valve when the damping valve of the damper having the larger diameter cylinder opens the opening end of the damping passage, a lift amount hs from the opening end of the damping valve when the damping valve of the damper having the smaller diameter cylinder opens the opening end of the damping passage, a flow rate coefficient c, and a hydraulic oil density p.

$$\frac{\rho}{2}\left(\frac{A_S V_M}{2 c h_S \pi d_S}\right)^2 \times A_S = \frac{\rho}{2}\left(\frac{A_L V_M}{2 c h_L \pi d_L}\right)^2 \times A_L \quad \cdots (2)$$

Upon organizing Eq. (2), the following Eq. (3) is obtained.

$$\frac{A_S^3}{h_S^2 d_S^2} = \frac{A_L^3}{h_L^2 d_L^2}$$

When the operation direction of the damper switches from a state in which the damping valve is opening, the damping valve closes. At this time, hydraulic oil in the gap between the damping valve and the damping passage is pushed out to the damping passage by the closing of the damping valve. The damper cannot exert a damping force until the damping valve closes, and thus the time from the switching of the operation direction of the damper until the damping valve closes is waste time in which a damping force cannot be exerted. The amount of hydraulic oil in the gap between the damping valve and the damping passage is equivalent to the amount of hydraulic oil that is pushed out from the chamber that is compressed to the damping passage by the displacement of the piston during the waste time. Therefore, the following Eq. (4) and Eq. (5) are established using a waste time $t_L$ of the damper having the larger diameter cylinder and a waste time $t_S$ of the damper having the smaller diameter cylinder.

$$\frac{h_L \pi d_L^2}{4} = t_L A_L V_M \quad \cdots\cdots\cdots\cdots (4)$$

$$\frac{h_S \pi d_S^2}{4} = t_S A_S V_M \quad \cdots\cdots\cdots\cdots (5)$$

Upon organizing Eq. (4) and Eq. (5) for the waste times $t_L$ and ts and then finding the ratio of the waste times, the result of the following Eq. (6) is obtained. Referring to Eq. (6), it can be understood that the ratio $t_L/t_S$ of the waste times is proportional to the square of the ratio $A_L/A_S$ of the cylinder cross-section areas, and is directly proportional to the ratio hs/$h_L$ of the lift amounts. The ratio $A_L/A_S$ is the ratio of the cylinder cross-section areas, and thus easily becomes $A_L/A_S=(h_L/h_S)^2$ due to the arrangement space. In other words, roughly speaking, the ratio $t_L/t_S$ of the waste times is proportional to the ratio $A_L/A_S$ of the cylinder cross-section areas to the power of 3/2, and thus it can be understood that the waste time from the switching of the operation direction of the damper until the damping force is exerted tends to become longer as the cylinder diameter increases.

$$\frac{t_L}{t_S} = \left(\frac{A_L}{A_S}\right)^2 \left(\frac{hs}{h_L}\right) \quad \cdots\cdots\cdots\cdots (6)$$

Incidentally, hydraulic oil is non-compressive. However, if a gas is mixed into the hydraulic oil, then the hydraulic oil behaves apparently as a compressible liquid. Thus, a volume $V_L$ of a gas included in the cylinder of the damper having the larger diameter cylinder and the volume Vs of a gas included in the cylinder of the damper having the smaller diameter cylinder are represented by the following Eq. (7) and Eq. (8) using an oil column height L within the cylinder and a gas mixing ratio $\chi$.

$$V_L = \chi A_L L \quad \cdots\cdots\cdots\cdots (7)$$

$$V_S = \chi A_S L \quad \cdots (8)$$

If the hydraulic oil is compressed and the damping force generated by the damper reaches a target damping force F, the following Eq. (9) and Eq. (10) are established under Boyle's law using a volume $V_{LM}$ of a gas in the damper having the larger diameter cylinder, a volume $V_{SM}$ of a gas in the damper having the smaller diameter cylinder, and a pressure $P_{air}$ of a gas prior to compression.

$$P_L V_{LM} = Pair V_L \quad \cdots\cdots\cdots\cdots (9)$$

$$P_S V_{SM} = Pair V_S \quad \cdots\cdots\cdots\cdots (10)$$

If a change in volume $\Delta V_L$, $\Delta V_S$ of the gas is found from Eq. (9) and Eq. (10), the following Eq. (11) and Eq. (12) are obtained. However, $\Delta V_L = V_L - V_{LM}$ and $\Delta V_S = V_S - V_{SM}$, and since the two cylinders have the same target damping force, $P_L = F/A_L$ and $P_S = F/A_S$.

$$\Delta V_L = \chi A_L L (1 - Pair A_L / F) \quad \cdots\cdots\cdots\cdots (11)$$

$$\Delta V_S = \chi A_S L (1 - Pair A_S / F) \quad \cdots\cdots\cdots\cdots (12)$$

During a time $t_{LP}$, tsp from when the damper begins to compress the hydraulic oil until the damping force of the damper reaches the target damping force F, the piston moves at a stroke velocity Vm to compress the hydraulic oil. The amount of compression accompanying this movement of the piston is equivalent to the change in volume $\Delta V_L$, $\Delta V_S$ of the gas, and thus Eq. (13) and Eq. (14) are obtained.

$$\Delta V_L = t_{LP} A_L V_M \quad \cdots\cdots\cdots\cdots (13)$$

$$\Delta V_S = t_{SP} A_S V_M \quad \cdots\cdots\cdots\cdots\cdots (14)$$

Upon organizing Eq. (13) and Eq. (14) for the times $t_{Lp}$ and tsp and then finding the ratio of the times, the following Eq. (15) is obtained. Referring to Eq. (15), from the relationship $A_L > A_S$, the time ratio $t_{Lp}/T_{Sp}$ is 0 or more and less than 1, and it can be understood that the delay in the rise of pressure within the cylinder accompanying the compressibility of the hydraulic oil tends to decrease as the cylinder diameter increases.

$$\frac{t_{LP}}{t_{SP}} = \frac{F - Pair A_L}{F - Pair A_S} \quad \cdots\cdots\cdots\cdots (15)$$

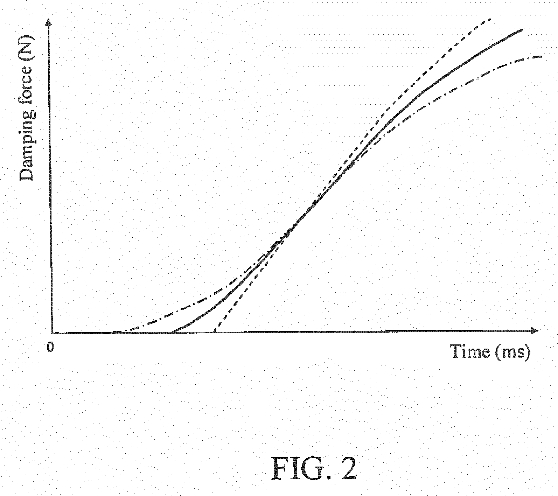

Given the above, as shown by the dashed line in FIG. 2, the characteristics of the damping force of the damper DR having the cylinder 3R with a large inner diameter exhibit a tendency in which the waste time increases relative to the damping force generation response and it is difficult to generate a time delay relative to the rise in pressure within the cylinder 3R. Conversely, as shown by the dot-dash line in FIG. 2, the characteristics of the damping force of the damper DL having the cylinder 3L with a small inner diameter exhibit a tendency in which the waste time decreases relative to the damping force generation response and the delay increases relative to the rise in pressure within the cylinder 3L.

The suspension apparatus S1 includes the damper DR having a large cylinder inner diameter and the damper DL having a small cylinder inner diameter. The waste time until generation of the damping force in the damper DR is long, but the waste time until generation of the damping force in the damper DL is short. Therefore, in the suspension apparatus S1, a damping force is quickly exerted when the operation direction of the front forks FfR, FfL switches.

Further, in the damper DL, the rise in pressure within the cylinder 3L takes time, but in the damper DR, the rise in pressure within the cylinder 3R does not take time. Therefore, in the suspension apparatus S1, characteristics in which the damping force rises quickly can be realized.

Accordingly, as shown by the solid line in FIG. 2, in the characteristics of the total damping force output by both of the front forks FfR and FfL of the suspension apparatus S1, the waste time is short and the damping force rises quickly along with an increase in the stroke velocity without the rise in pressure becoming sluggish.

In this way, in the suspension apparatus S1, the inner diameters of the cylinders 3R and 3L of the dampers DR and DL are different. Therefore, even if the waste time until damping force generation is long in the one damper DR, the waste time until damping force generation is short in the other damper DL, and thus the damping force is exerted quickly. Further, even if it takes time for the pressure to rise within the cylinder 3L in the other damper DL, it does not take time for the pressure to rise within the cylinder 3R in the one damper DR, and thus the damping force rises quickly. Accordingly, in the suspension apparatus S1, a large damping force can be obtained and the time delay until damping force generation can be reduced. In addition, according to the suspension apparatus S1 of the present invention, disadvantages that are caused by the setting of the cylinder inner diameters can be largely avoided, the riding comfort in the saddle-type vehicle can be improved, and the degree of freedom in the design of the damping force characteristics can be improved.

If the cylinder 3L having a small inner diameter is used in both the left and right dampers DR and DL, in a state in which the stroke velocity is approximately 0, it would be difficult to exert a damping force due to the influence of a leak gap in the damping valve. Since the suspension apparatus S1 includes the damper DR having the large diameter cylinder 3R, a damping force can be exerted even if the stroke velocity transitions to approximately 0.

Moreover, since the suspension apparatus S1 includes the damper DR having the cylinder 3R with a large inner diameter, in the case that the front fork FfR is constituted in an air suspension manner, a balance spring that cancels an initial reaction force of a gas spring during maximum extension can be installed within the cylinder 3R without any difficulty. In other words, it is possible to constitute the suspension apparatus S1 in an air suspension manner.

In addition, in the case that a variable damping valve is used as the damping valve and feedback control is executed, the possibility that the front fork will oscillate due to linkage with a control input at a specific natural frequency increases. Since the suspension apparatus S1 includes the damper DR having a large cylinder inner diameter and the damper DL having a small cylinder inner diameter, it is possible to set both the front forks FfR and FfL so that their mechanical natural frequencies will differ easily. Therefore, a situation in which the left and right front forks FfR and FfL oscillate simultaneously leading to difficulties in control can be prevented.

Furthermore, since the suspension apparatus S1 includes the damper DL having the cylinder 3L with a small inner diameter, a large space can be secured between the damper DL and the fork main body FL. Therefore, it is possible to dispose a suspension spring on the outer periphery of the damper DL, and the degree of freedom in selecting such a suspension spring is also improved. Further, an annular spring receiver that supports one end of the suspension spring can be attached to the outer periphery of the damper DL. A restriction flow passage is formed when the spring receiver is made to advance into the hydraulic oil within the reservoir 16L, and a damping force can be exerted by this restriction flow passage.

In a general damper, hydraulic oil passes through the extension-side damping passage during extension and a pressure difference is generated between the extension-side chamber and the contraction-side chamber. According to the orifice equation, the pressure difference between the extension-side chamber and the contraction-side chamber is proportional to the square of the flow rate. Since the hydraulic oil passes through the extension-side damping passage upon being pushed by the piston within the cylinder, the flow rate of hydraulic oil in the extension-side damping passage becomes a value resulting from multiplying the stroke velocity of the damper by the pressure receiving area on the side of the extension-side chamber of the piston. Further, the damping force becomes a value resulting from multiplying the pressure difference by the pressure receiving area on the side of the extension-side chamber of the piston. However, if the cylinder diameter is large, the orifice diameter also tends to be large, and this easily results in a relationship in which the area of the orifice opening and the pressure receiving area of the piston are proportional to each other. Given the above, the damping force that is exerted by the damper is proportional to roughly the square of the pressure receiving area on the side of the extension-side chamber of the piston.

If the stroke velocity of the damper is extremely low, the damping valve closes the extension-side damping passage, but a leak gap is formed. Since hydraulic oil passes through this leak gap, a pressure difference between the extension-side chamber and the contraction-side chamber is generated, and a damping force is generated. In contrast, if the stroke velocity of the damper is high, the damping valve opens the extension-side damping passage to the maximum degree. Since the inner diameter of the extension-side damping passage is fixed, the flow passage area of the extension-side damping passage becomes smaller than the flow passage area that is restricted by the damping valve. The pipeline resistance of the extension-side damping passage becomes greater than the resistance by the damping valve, and thus the damper exerts a damping force dependent on the pipeline resistance of the extension-side damping passage.

On the other hand, until the stroke velocity of the damper exceeds the extremely low velocity and becomes a high velocity, the damper can exert a desired damping force by the setting of the damping valve. To summarize the above, in a general damper, it is difficult to adjust the damping force when the stroke velocity is extremely low or is high.

As described above, the damping force that is generated by the damper is proportional to roughly the square of the pressure receiving area on the side of the extension-side chamber of the piston. The suspension apparatus S1 includes the damper DR having a large cylinder inner diameter and the damper DL having a small cylinder inner diameter.

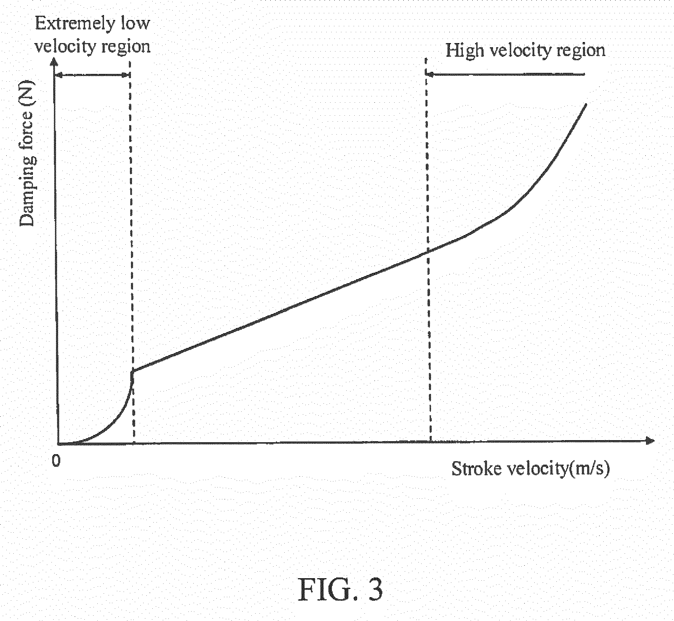

If the stroke velocity is extremely low, the damping force that is generated by the damper DR having a large cylinder inner diameter differs from the damping force generated by the damper DL having a small cylinder inner diameter. The suspension apparatus S1 exerts a damping force equivalent to the total of the damping forces generated by the left and right dampers DR and DL. Therefore, by adjusting the cylinder inner diameters of the left and right dampers DR and DL, the characteristics of the damping force that is exerted by the suspension apparatus S1 when the stroke velocity is extremely low can be easily adjusted as shown in FIG. 3.

Further, if the stroke velocity is high, the damping force that is generated by the damper DR having a large cylinder inner diameter differs from the damping force generated by the damper DL having a small cylinder inner diameter. The suspension apparatus S1 exerts a damping force equivalent to the total of the damping forces generated by the left and right dampers DR and DL. Therefore, by adjusting the cylinder inner diameters of the left and right dampers DR and DL, the characteristics of the damping force that is exerted by the suspension apparatus S1 when the stroke velocity is high can be easily adjusted as shown in FIG. 3.

It can be said that the characteristics shown in FIG. 3 are the same for the contraction-side damping force as well.

As mentioned above, the cylinder inner diameters of the left and right dampers DR and DL are different. Even if the outer diameters of the piston rods 7R and 7L are different, the pressure receiving areas on the side of the contraction-side chambers 6R, 6L of the pistons 4R and 4L in the left and right dampers DR and DL can be made to differ. Therefore, the characteristics of the damping force during the contraction operation can also be improved by setting the inner diameters of the cylinders 3R and 3L to be the same and setting only the outer diameters of the piston rods 7R and 7L in the left and right dampers DR and DL to be different. Thereby, disadvantages that are caused by the setting of the piston rod outer diameters can be largely avoided, the riding comfort in the saddle-type vehicle can be improved, and the degree of freedom in the design of the damping force characteristics can be improved.

<Second Embodiment>

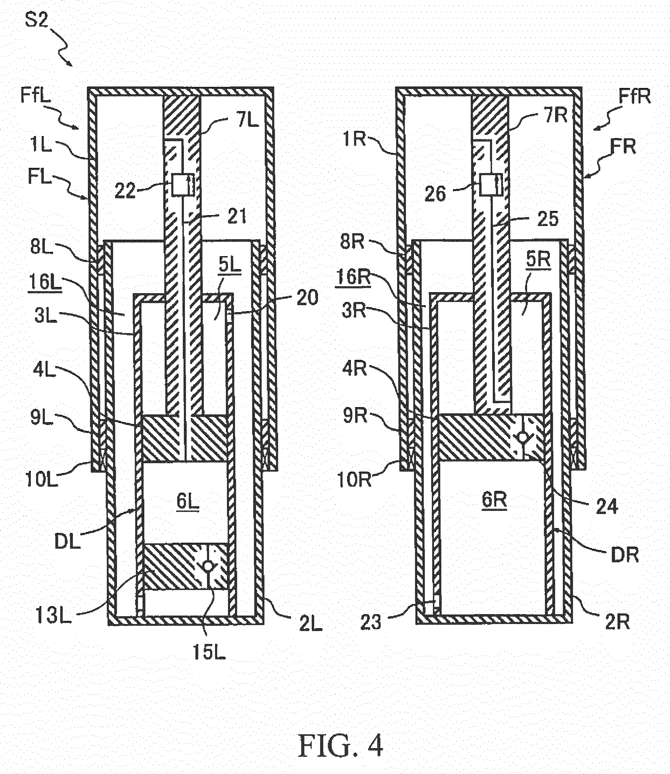

Next, a suspension apparatus S2 of a second embodiment will be explained below. In the suspension apparatus S2 of the second embodiment, as shown in FIG. 4, the structures of the dampers DR and DL differ from those of the suspension apparatus S1 of the first embodiment. Since detailed explanations of those constituent members which are the same in both the suspension apparatus S2 of the second embodiment and the suspension apparatus S1 of the first embodiment would be redundant, in the following, those constituent members which are the same will merely be assigned the same reference numeral and detailed explanations thereof will be omitted.

With regard to the suspension apparatus S2 of the second embodiment, the following detailed explanations will focus on those portions which differ from the suspension apparatus S1 of the first embodiment. The damper DR does not include the valve case 13R (refer to FIG. 1), and a through hole 23 which constantly allows the contraction-side chamber 6R to communicate with the reservoir 16R is provided in the cylinder 3R. In the piston 4R, the extension-side damping passage 11R and the contraction-side damping passage 12R are not provided, and instead a passage 24 that permits only the flow of hydraulic oil from the contraction-side chamber 6R toward the extension-side chamber 5R is provided. Further, the damper DR includes a damping passage 25 that opens to the side of the piston rod 7R facing the extension-side chamber 5R and communicates with the reservoir 16R, and a proportional control valve 26 that is provided in the damping passage 25 and serves as a variable damping valve.

On the other hand, in the damper DL, only the suction passage 15L is provided to the valve case 13L, and the discharge passage 14L is not provided to the valve case 13L. In the piston 4L, the extension-side damping passage 11L and the contraction-side damping passage 12L are not provided. A through hole 20 that allows the extension-side chamber 5L to communicate with the reservoir 16L is provided at a top end side of the cylinder 3L, and the extension-side chamber 5L constantly communicates with the reservoir 16L. Further, the damper DL includes a damping passage 21 that opens to the bottom end of the piston rod 7L and communicates with the reservoir 16L, and a proportional control valve 22 that is provided in the damping passage 21 and serves as a variable damping valve. The proportional control valve 22 and the proportional control valve 26 both have the same dimensions and the same structure.

Therefore, when the damper DR performs an extension operation, the piston 4R moves relative to the cylinder 3R (upwards in FIG. 4), and hydraulic oil moves from the compressed extension-side chamber 5R to the reservoir 16R via the damping passage 25. Since the proportional control valve 26 applies resistance to the flow of hydraulic oil passing through the damping passage 25, the pressure in the extension-side chamber 5R is controlled by the proportional control valve 26. Hydraulic oil is supplied from the reservoir 16R via the through hole 23 to the expanded contraction-side chamber 6R, and thus the pressure of the contraction-side chamber 6R becomes the reservoir pressure. Accordingly, a pressure difference is generated between the extension-side chamber 5R and the contraction-side chamber 6R. This pressure difference acts on the piston 4R and the damper DR exerts a damping force to suppress the extension operation.

In contrast, when the damper DR performs a contraction operation, the piston 4R moves relative to the cylinder 3R (downwards in FIG. 4), and hydraulic oil is pushed out from the contraction-side chamber 6R to the reservoir 16R via the through hole 23. Thus, the pressure of the contraction-side chamber 6R becomes the reservoir pressure. On the other hand, hydraulic oil is supplied from the contraction-side chamber 6R that is communicating with the reservoir 16R via the passage 24 to the expanded extension-side chamber 5R, and thus the pressure of the extension-side chamber 5R becomes the reservoir pressure. Accordingly, a pressure difference is not generated between the extension-side chamber 5R and the contraction-side chamber 6R, and the damper DR exerts hardly any damping force during the contraction operation.

In other words, the damper DR exerts a damping force only during the extension operation.

Meanwhile, when the damper DL performs an extension operation, the piston 4L moves relative to the cylinder 3L (upwards in FIG. 4), and hydraulic oil is pushed out from the extension-side chamber 5L to the reservoir 16L via the through hole 20. Thus, the pressure of the extension-side chamber 5L becomes the reservoir pressure. On the other hand, hydraulic oil is supplied from the reservoir 16L via the suction passage 15L to the expanded contraction-side chamber 6L, and thus the pressure of the contraction-side chamber 6L becomes the reservoir pressure. Accordingly, a pressure difference is not generated between the extension-side chamber 5L and the contraction-side chamber 6L, and the damper DL exerts hardly any damping force during the extension operation.

In contrast, when the damper DL performs a contraction operation, the piston 4L moves relative to the cylinder 3L (downwards in FIG. 4), and hydraulic oil moves from the compressed contraction-side chamber 6L to the reservoir 16L via the damping passage 21. Since the proportional control valve 22 applies resistance to the flow of hydraulic oil passing through the damping passage 21, the pressure in the contraction-side chamber 6L is controlled by the proportional control valve 22. Hydraulic oil is supplied from the reservoir 16L via the through hole 20 to the expanded extension-side chamber 5L, and thus the pressure of the extension-side chamber 5L becomes the reservoir pressure. Accordingly, a pressure difference is generated between the extension-side chamber 5L and the contraction-side chamber 6L. This pressure difference acts on the piston 4L and the damper DL exerts a damping force to suppress the contraction operation.

As described above, the damping force that is required during the contraction operation is about 1/2 of that required during the extension operation. The inner diameter of the cylinder 3R of the damper DR is set so as to be equivalent to a value resulting from multiplying the inner diameter of the cylinder 3L of the damper DL by the fourth root of 2. Thereby, the damping force generated by the damper DL that is contracting at a certain stroke velocity becomes 1/2 of the damping force generated by the damper DR that is extending at the same stroke velocity.

Therefore, even though the suspension apparatus S2 uses the variable damping valves 22 and 26 which have the same structure and dimensions, a damping force of double the size of that during the contraction operation can be exerted during the extension operation. Thus, the suspension apparatus S2 does not require two types of variable damping valves for the extension operation and the contraction operation in a single front fork FfR, FfL. Even if the proportional control valves 22 and 26 of the same standards are used, the suspension apparatus S2 can exert a damping force of the required size during the extension operation and during the contraction operation.

Further, according to the suspension apparatus S2 of the present embodiment, disadvantages that are caused by the setting of the cylinder inner diameters can be largely avoided, the riding comfort in the saddle-type vehicle can be improved, and the degree of freedom in the design of the damping force characteristics can be improved.

Incidentally, in a suspension apparatus equipped with a pair of dampers of the same structure, the damping force of the dampers during the extension operation and during the contraction operation is adjusted by different variable damping valves for the extension side and the contraction side provided to the pair of dampers. The damping force that is required during the contraction operation is approximately 1/2 of the damping force that is required during the extension operation. Therefore, it is necessary to develop and mass produce variable damping valves with a two-fold difference in the pressure difference or throttle coefficient. In addition, the "operation velocity" that is required during the contraction operation is approximately double the "operation velocity" required during the extension operation. Therefore, it is necessary to develop and mass produce variable damping valves with a two-fold difference in the "flow rate rating". The development and mass production of variable damping valves are not only disadvantageous in terms of the cost but are also complicated to manage.

In the present embodiment, even though the proportional control valves 22 and 26 of the same standard are used, the suspension apparatus S2 can exert a damping force of the required size during the extension operation and during the contraction operation. Therefore, it is not necessary to develop and mass produce variable damping valves with different flow rate ratings. Thus, the present embodiment is not only advantageous in terms of the cost but is also simple in terms of management of the variable damping valves.

In the present embodiment, the proportional control valves 22 and 26 are used in order to control the damping force of the dampers DR and DL. The inner diameter of the cylinder 3R is equivalent to a value resulting from multiplying the inner diameter of the cylinder 3L by the fourth root of 2, and the damping force that is generated by the damper DL is 1/2 of the damping force generated by the damper DR.

In the case that it is not necessary to control the damping force and fixed orifices are used instead of the proportional control valves 22 and 26, the inner diameter of the cylinder 3R is preferably equivalent to a value resulting from multiplying the inner diameter of the cylinder 3L by the sixth root of 2. Thereby, the damping force that is generated by the damper DL becomes 1/2 of the damping force generated by the damper DR.

Furthermore, in the case that pressure control valves are used instead of the proportional control valves 22 and 26, the inner diameter of the cylinder 3R is preferably equivalent to a value resulting from multiplying the inner diameter of the cylinder 3L by the square root of 2. Thereby, the damping force that is generated by the damper DL becomes 1/2 of the damping force generated by the damper DR.

In the present embodiment, the damping force that is generated by the damper DL is set to 1/2 of the damping force generated by the damper DR. However, the ratio of the damping force that is generated by the damper DL and the damping force that is generated by the damper DR can be arbitrarily set. The inner diameter of the cylinder 3R and the inner diameter of the cylinder 3L are set according to the ratio that is to be set. For example, in the suspension apparatus S2 using the proportional control valves 22 and 26, if the damping force that is generated by the damper DL is to be set to 1/N of the damping force generated by the damper DR, the inner diameter of the cylinder 3R should be equivalent to a value resulting from multiplying the inner diameter of the cylinder 3L by the fourth root of N.

In the present embodiment, the cylinder inner diameters of the left and right dampers DR and DL are set to be different. However, the outer diameters of the piston rods 7R and 7L may be different. In this case, the pressure receiving areas of the extension-side chamber 5R and the contraction-side chamber 6L of the pistons 4R and 4L of the left and right dampers DR and DL can be made to differ. Thus, even if the inner diameters of the cylinders 3R and 3L are the same, the characteristics of the damping force during the extension operation can be improved by making only the outer diameters of the piston rods 7R and 7L in the left and right dampers DR and DL different. Thereby, disadvantages that are caused by the setting of the piston rod outer diameters can be largely avoided, the riding comfort in the saddle-type vehicle can be improved, and the degree of freedom in the design of the damping force characteristics can be improved.

In addition, not only the inner diameters of the cylinders 3R and 3L of the left and right dampers DR and DL but also the outer diameters of the piston rods 7R and 7L of the left and right dampers DR and DL may be different. Thereby, disadvantages that are caused by the setting of the cylinder inner diameters and the piston rod outer diameters can be largely avoided, the riding comfort in the saddle-type vehicle can be improved, and the degree of freedom in the design of the damping force characteristics can be improved.

The above explanation was related to an example in which the suspension apparatus of the present embodiment is applied to a front fork of a saddle-type vehicle. However, the present embodiment can be used as a suspension apparatus of a vehicle other than a saddle-type vehicle (such as a four-wheeled vehicle, etc.) by providing two dampers per one vehicle wheel.

Embodiments of this invention were described above, but the above embodiments are merely examples of applications of this invention, and the technical scope of this invention is not limited to the specific constitutions of the above embodiments.

This application claims priority based on Japanese Patent Application No.2014-197946 filed with the Japan Patent Office on September 29, 2014, the entire contents of which are incorporated into this specification.

**Claims**

1.  A suspension apparatus comprising a pair of dampers configured to extend/contract to exert a damping force, wherein each of the dampers comprises:

    a cylinder;
    a piston slidably inserted into the cylinder and configured to partition the inside of the cylinder into an extension-side chamber and a contraction-side chamber; and
    a piston rod connected to the piston and movably inserted into the cylinder, and

    an inner diameter of the cylinder of one of the dampers is different from an inner diameter of the cylinder of the other.

2.  A suspension apparatus comprising a pair of dampers configured to extend/contract to exert a damping force, wherein each of the dampers comprises:

    a cylinder;
    a piston slidably inserted into the cylinder and configured to partition the inside of the cylinder into an extension-side chamber and a contraction-side chamber; and
    a piston rod connected to the piston and movably inserted into the cylinder, and

    an outer diameter of the piston rod of one of the dampers is different from an outer diameter of the piston rod of the other.

3.  A suspension apparatus comprising a pair of dampers configured to extend/contract to exert a damping force, wherein each of the dampers comprises:

    a cylinder;
    a piston slidably inserted into the cylinder and configured to partition the inside of the cylinder into an extension-side chamber and a contraction-side chamber; and
    a piston rod connected to the piston and movably inserted into the cylinder,

    an inner diameter of the cylinder of one of the dampers is different from an inner diameter of the cylinder of the other, and
    an outer diameter of the piston rod of the one of the dampers is different from an outer diameter of the piston rod of the other.

4.  The suspension apparatus according to any one of claims 1 to 3, further comprising a pair of fork main bodies, each of the fork main bodies including an outer tube and an inner tube slidably inserted into the outer tube, wherein the one of the dampers is accommodated within one of the fork main bodies, and the other of the dampers is accommodated within the other of the fork main bodies.

FIG. 1

FIG. 2

FIG. 3

FIG. 4

## INTERNATIONAL SEARCH REPORT

| International application No. |
|---|
| PCT/JP2015/076403 |

| A. CLASSIFICATION OF SUBJECT MATTER |
|---|
| *F16F9/32*(2006.01)i, *B62K25/08*(2006.01)i |

According to International Patent Classification (IPC) or to both national classification and IPC

| B. FIELDS SEARCHED |
|---|

Minimum documentation searched (classification system followed by classification symbols)
F16F9/32, B62K25/08

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 01-501218 A (Negrini Moto S.p.A.),<br>27 April 1989 (27.04.1989),<br>page 2, upper right column, lines 2 to 20; page 3, upper left column, line 7 to page 4, line 13; fig. 1 to 3, 7, 10<br>& WO 1988/003493 A1<br>page 3, line 22 to page 8, line 11; claim 6; fig. 1 to 3, 7, 10 | 1-3<br>4 |
| X<br>A | JP 2014-163496 A (Takenaka Corp.),<br>08 September 2014 (08.09.2014),<br>paragraphs [0040], [0062] to [0092]; fig. 5<br>(Family: none) | 1-3<br>4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 October 2015 (09.10.15) | Date of mailing of the international search report<br>27 October 2015 (27.10.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
|---|
| PCT/JP2015/076403 |

C (Continuation).  DOCUMENTS CONSIDERED TO BE RELEVANT

| Category* | Citation of document, with indication, where appropriate, of the relevant passages | Relevant to claim No. |
|---|---|---|
| X<br>A | JP 61-189335 A  (Kabushiki Kaisha Koganei Seisakusho),<br>23 August 1986 (23.08.1986),<br>page 2, upper right column, line 7 to page 4, lower right column, line 6; fig. 1<br>(Family: none) | 2<br>1,3-4 |
| Y | JP 2012-180890 A  (Kayaba Industry Co., Ltd.),<br>20 September 2012 (20.09.2012),<br>paragraphs [0020] to [0033]<br>(Family: none) | 4 |

Form PCT/ISA/210 (continuation of second sheet) (July 2009)

**REFERENCES CITED IN THE DESCRIPTION**

**Patent documents cited in the description**

- JP 2001050327 A
- JP 2014197946 A